# EUROPEAN PATENT APPLICATION

(11) **EP 4 848 113 A2**
(43) Date of publication of application: **02.12.2026**
(21) Application number: 26175681.1
(22) Date of filing: 30.04.2026
(51) Int. Cl.: G06F 17/16, G06N 3/063

(54) **SYSTEMS AND METHODS FOR PERFORMNING MACHINE LEARNING OPERATIONS VIA AN ACCELERATION DEVICE**

(30) Priority: 28.05.2025 US 202563813410 P; 11.06.2025 US 202563822164 P; 24.03.2026 US 202619576388
(71) Applicant: Samsung Electronics Co., Ltd., Suwon-si, Gyeonggi-do 16677 (KR)
(72) Inventor: LI, Zongwang, San Jose, CA, 95134 (US); KI, Yang Seok, San Jose, CA, 95134 (US); PITCHUMANI, Rekha, San Jose, CA, 95134 (US)
(74) Representative: Kuhnen & Wacker Patent- und Rechtsanwaltsbüro PartG mbB

(57) **Abstract**

Systems and methods for performing machine learning operations via an acceleration device are disclosed. The method includes generating, by a computing device, a sparse matrix from a first matrix, the sparse matrix having a first submatrix with zero-valued elements and a second submatrix with non-zero valued elements; providing, by the computing device to a processing element, first metadata and second metadata, the first metadata including a location of the second submatrix, and the second metadata including an order for a second matrix; loading onto memory, by the processing element, the second submatrix based on the first metadata; loading onto the memory, by the processing element, a portion of the second matrix based on the second metadata. A computation may be performed based on the second submatrix and the portion of the second matrix, and results of the computation may be provided to the computing device.

## Description

### FIELD

One or more aspects of embodiments according to the present disclosure relate to acceleration devices, and more particularly to performing machine learning computations via an acceleration device.

### BACKGROUND

The use of artificial intelligence (Al) has increased dramatically over the last few years. Using Al often necessitates the use of large datasets and computations based on the large datasets. The computations may include matrix multiplications often involving large matrices.

The above information disclosed in this Background section is only for enhancement of understanding of the background of the present disclosure, and therefore, it may contain information that does not form prior art.

### SUMMARY

Embodiments of the present disclosure are directed to a method comprising: generating, by a computing device, a sparse matrix from a first matrix, the sparse matrix having a first submatrix with zero-valued elements and a second submatrix with non-zero valued elements; providing, by the computing device to a processing element, first metadata and second metadata, the first metadata including a location of the second submatrix, and the second metadata including an order for a second matrix; loading onto memory, by the processing element, the second submatrix based on the first metadata; loading onto the memory, by the processing element, a portion of the second matrix based on the second metadata; based on loading the second submatrix and the portion of the second matrix onto the memory, performing a computation based on the second submatrix and the portion of the second matrix; and providing a result of the computation to the computing device.

In some embodiments, the sparse matrix includes weights of a layer of a machine learning model, and the second matrix includes activation values.

In some embodiments, the first metadata includes a bit-mask storing a first value for a location of the first submatrix and a second value for the location of the second submatrix.

In some embodiments, the generating of the sparse matrix includes: changing a first zero-valued element of the first matrix from a first position to a second position; grouping into the first submatrix, the first zero-valued element in the second position and a second zero-valued element in a third position adjacent to the second position.

In some embodiments, the second metadata includes position indices of the first matrix reflecting a change of position of the first zero-valued element from the first position to the second position.

In some embodiments, the first position is a first row of the first matrix and the second position is a second row of the first matrix.

In some embodiments, the first position is a first column of the first matrix and the second position is a second column of the first matrix.

In some embodiments, the generating of the sparse matrix includes: identifying one or more non-zero valued elements in the first matrix; and grouping into the second submatrix the one or more non-zero valued elements.

In some embodiments, the first submatrix and the second submatrix have a preset size.

In some embodiments, the computation is a column-wise matrix multiplication of the second submatrix and the portion of the second matrix.

One or more embodiments of the present disclosure are directed to a computing device coupled to a processing element. The computing device may include a processor and a first memory. The first memory may store instructions that, when executed by the processor, cause the processor to: generate a sparse matrix from a first matrix, the sparse matrix having a first submatrix with zero-valued elements and a second submatrix with non-zero valued elements; provide to the processing element a first metadata and second metadata, the first metadata including a location of the second submatrix, and the second metadata including an order for a second matrix; and receive from the processing element a result of a computation based on the sparse matrix. The processing element may be designed to: load onto a second memory the second submatrix based on the first metadata; load onto the second memory a portion of the second matrix based on the second metadata; and based on loading the second submatrix and the portion of the second matrix onto the second memory, perform the computation based on the second submatrix and the portion of the second matrix.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a block diagram of a system for performing a block-based spare matrix multiplication for a machine learning operation according to one or more embodiments;
FIG. 2 depicts a block diagram of a processing element of an acceleration device according to one or more embodiments;
FIGS. 3A-3B depict conceptual layout diagrams of an original matrix that undergoes a shuffling process to generate a reordered matrix according to one or more embodiments;
FIG. 4 depicts a conceptual layout diagram of sparse matrix metadata for a sparse matrix in an example of FIGS. 3A-3B according to one or more embodiments;
FIG. 5 depicts a conceptual layout diagram of an activation order metadata for reordered columns and rows of an original matrix in an example of FIGS. 3A-3B according to one or more embodiments;
FIGS. 6A-6B depict an example column-wise multiplication of a block-based sparse matrix of FIGS. 3A-3B, with a second (e.g., activation) matrix, to generate a result matrix, according to one or more embodiments; and
FIG. 7 depicts a flow diagram of a process for performing a matrix computation for a machine-learning operation according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

Matrix multiplications may be performed extensively in machine learning (e.g., neural network) operations, such as, for example, neural network training and neural network inference operations. For example, during a machine learning training or inference operation, a first matrix (e.g., a weight matrix) may be multiplied via matrix multiplication with a second matrix (e.g., an activation matrix) to obtain an output. The output may be a prediction or inference by a layer of the machine learning network.

The matrix multiplication may be performed by a processing circuit of an acceleration device referred to as a tensor or general matrix multiplication (GEMM) engine. The GEMM engine may be configured for dense matrix multiplicity that performs calculations of zero-valued elements of the matrix in the same way as non-zero valued elements. A considerable amount of power, computing energy, and memory bandwidth may be used to perform the dense matrix multiplications.

Embodiments of the present disclosure are directed to performing machine learning operations via an acceleration device that uses sparse matrix multiplication in performing the machine learning operations. The sparse matrix multiplication may be of weight and activation matrices associated with a layer of a machine learning model. In some embodiments, at least one of the matrices (e.g., the weight matrix) may contain a large number (e.g., > 50%) of zero-valued elements irregularly located throughout the matrix. Columns and/or rows of the matrix may be moved, rearranged, or shuffled (used interchangeably herewith) to isolate sparsity (e.g., the zero-valued elements) into one or more blocks or submatrices. The generated submatrices may contain one or more of the zero-valued elements of the matrix. When the zero-valued submatrices or blocks exceed the non-zero-valued submatrices or blocks by a threshold value, the matrix may be deemed to be a block-based sparse matrix (simply referred to as a sparse matrix) on which block-based sparse matrix multiplications may be performed via the tensor engine.

In some embodiments, conducting block-based sparse matrix multiplications help reduce computations of zero-valued elements (e.g., zero-valued submatrices) of a matrix. By by-passing retrieval and dot product computation of the zero valued elements, savings in power consumption and use of compute resources may be achieved. For example, the number of read/write operations to and from the memory, and the number of floating-point operations (FLOPs), may be reduced.

In comparison, dense matrix multiplication performs computation of each element of a matrix even though the element may be a zero-valued element. In performing a dense matrix multiplication, each of the row vectors and each of the column vectors may be retrieved from memory to calculate dot products of the row and column vectors in a parallelized manner. Retrieving the vectors from memory and performing the matrix multiplications may consume power, memory bandwidth, and computing resources in performing the FLOPs.

In some embodiments the block-based sparse matrix is generated by a host computing device offline, via a sparse matrix library prior to invoking the tensor engine to perform the matrix multiplication. One or more shuffling algorithms may be employed by the host to reorder the columns and/or rows of a matrix to generate the sub-blocks of the block-based sparse matrix. A sparse matrix metadata structure may provide the location of the zero-valued submatrices and the dense (e.g., non-zero valued) submatrices of the reordered matrix. An activation order metadata structure may store a mapping of the original matrix to the reordered matrix. The metadata structures may be provided to an acceleration device for loading the non-zero valued submatrices and performing a matrix computation with the corresponding portion (e.g., submatrix) of an activation matrix. The corresponding portion of the activation matrix may be identified based on the activation order metadata structure. Results of the computation may be returned to a requesting machine-learning application at the host.

The block-based sparse matrix multiplications according to one or more embodiments of the present disclosure may reduce memory capacity requirement, bandwidth, power consumption, and computation energy by aggregating the zero-valued elements of a matrix into blocks or submatrices, and by-passing computation of the zero-valued blocks. In some embodiments, a column-wise multiplicity method may be used for the block-based sparse matrix multiplication to achieve further efficiencies. For example, the column-wise matrix multiplication may help achieve load balance and data reuse to perform the matrix multiplication.

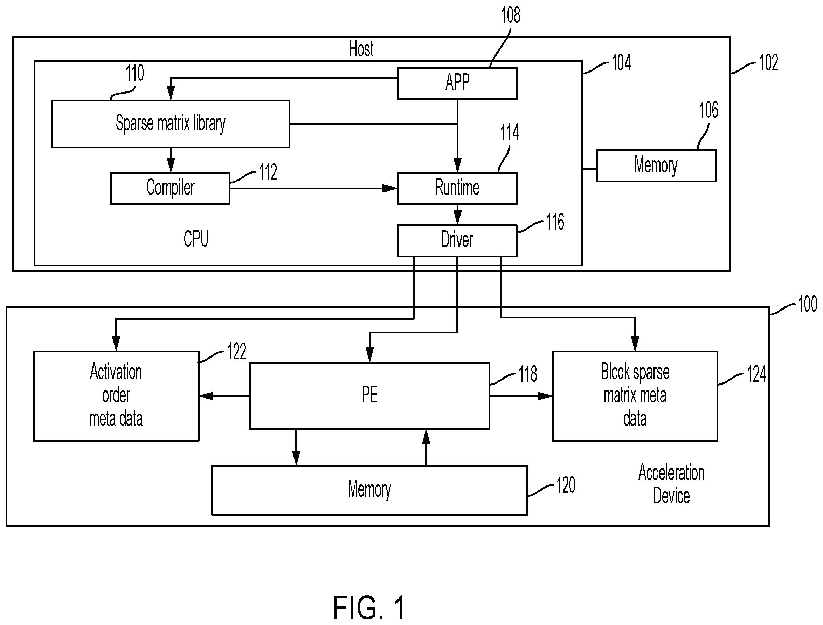

FIG. 1 depicts a block diagram of a system for performing a block-based spare matrix multiplication for a machine learning operation according to one or more embodiments. In some embodiments, the system includes one or more acceleration devices 100 coupled to a host computing device ("host" or "computing device") 102. The host may communicate with the memory devices 100 to offload to the acceleration devices 100, certain types of data-intensive computations such as, for example, convolution operations that are performed during a machine learning model training or inference operation. The convolution operations may include matrix multiplications that are used by the machine-learning model to make predictions or inferences based on a received input. The predictions or inferences may include, for example, image classifications for self-driving vehicles, text predictions based on input queries, and/or the like.

In some embodiments, the host 102 includes a processor 104 and a memory 106. The memory 106 may include, for example, a dynamic random access memory (DRAM) storing computer program instructions and/or data used by the processor 104 to provide the functionalities described herein.

In some embodiments, the processor 104 is configured to execute an application such as, for example, a machine-learning application that makes inferences or predictions based on a received input. A machine learning computation may be performed by the application 108 during the inference process. The computation may include, for example, a matrix computation of a first matrix and a second matrix. The first matrix may be a two-dimensional tensor of weights associated with a layer of a machine learning model. The second matrix may be a two-dimensional tensor of activations (e.g., inputs) for the layer of the machine learning model. The weight matrix may include zero-valued elements with irregular locations within the matrix. The number of zero-valued elements in the matrix may be, for example, greater than 50%. Performing a dense matrix multiplication of the zero-valued elements may be an unnecessary expenditure of processing power, computing resources, and memory bandwidth. Although in some aspects a sparse matrix computation may be performed directly on the original matrix to reduce the number of operations (e.g., FLOPs), the control logic to process the sparse matrix computation directly based on the original matrix may be complex due to the zero-valued elements being irregularly placed within the matrix.

Embodiments of the present disclosure allow the host 102 to process or pre-process a matrix prior to performing a matrix computation to isolate or aggregate the irregularly placed zero-valued elements of the matrix into blocks, groups, or submatrices (used interchangeably herein) that have a set size, and generate a block-based sparse matrix based on the generated blocks. In this regard, the host 102 includes a sparse matrix library 110 configured to generate the block-based sparse matrices. In some embodiments, the sparse matrix library 110 processes and converts the weight matrices into the block-based sparse matrices, although embodiments are not limited thereto. For example, block-based sparse matrices may be generated for activation matrices or other types of matrices used for machine learning operations.

The sparse matrix library 110 may be a static library or a runtime library. In some embodiments, the sparse matrix library 110 may be implemented in hardware, firmware (e.g., via an ASIC), and/or by a more general purpose hardware, such as a central processing unit (CPU) configured to execute instructions stored in a non-transitory storage medium (e.g., the memory 106).

In some embodiments, the sparse matrix library 110 may be configured with one or more algorithms to process an original input matrix (e.g., the weight matrix) and rearrange columns and/or rows of the original matrix to generate a block-based sparse matrix. For example, a first column or row containing a zero-valued element may be swapped with a second column or row containing a non-zero valued element for placing the first column or row next to another column or row containing a zero-valued element.

In some embodiments, a heuristic technique may be used to find a solution that generates a number (e.g., a maximum number) of blocks that aggregate or isolate the zero-valued elements within the block. In some embodiments, a divide and conquer mechanism may divide the original matrix into smaller matrixes, and different combinations of rearrangements of rows/columns may be performed on the smaller matrices to find a permutation of rows/columns that isolate the zero-valued elements into a block. In some embodiments an algorithm such as a breadth-first-search (BFS) shuffling algorithm, a multi-level graph partitioning algorithm (e.g., the *METIS* algorithm), and/or the like is employed to generate the block-based sparse matrix.

The generating of the block-based sparse matrix may be performed offline by the sparse matrix library 110 prior to invoking the acceleration device 100 to perform the matrix computation based on the matrix. In some embodiments, the generating of the block-based sparse matrix may be performed on runtime

In some embodiments, the sparse matrix library 110 is configured to generate information related to the block-based sparse matrix as first metadata and second metadata. The first metadata and the second metadata may be stored in one or more data structures. In some embodiments, the first metadata may be a sparse matrix metadata of locations of the sparse (zero-valued) and dense (non-zero valued) data within the sparse matrix. In some embodiments, the sparse matrix metadata may include a bitmap or bit-mask that identifies locations of the blocks with zero-valued elements (referred to as zero-valued blocks or submatrices), and locations of the dense blocks that include non-zero valued elements (referred to as non-zero valued blocks or submatrices). The bit-mask may be stored in a bit-mask matrix that has the same dimensions as the block-based sparse matrix. The bit-mask matrix may store a value of "1" in a position corresponding to a non-zero valued block, and a value of "0" in a position corresponding to a zero-valued block. The bit-mask may be used for even dense matrix multiplications without extra control circuits by placing a value of "1" for all the blocks of the matrix.

In some embodiments, the second metadata provides a mapping between the original weight matrix and the reordered weight matrix. The mapping may include a mapping of the columns of the original matrix to the columns of the reordered matrix, and a mapping of the rows of the original matrix to the rows of the reordered matrix. The mapping information may provide the correct activation order for an activation matrix to perform a matrix multiplication with the reordered weight matrix. For example, if two columns of the weight matrix are swapped to generate the reordered matrix, the order of the activation values may also need to be swapped. The second metadata may be referred to as an activation order metadata.

In some embodiments, a compiler 112 may receive the sparse block matrix information and perform optimizations of the matrix multiplication (e.g., GEMM kernel optimization) to achieve higher performance for the matrix multiplication. The optimization may relate, for example, to optimization of memory access patterns, data locality, memory layout, register allocation, and/or the like.

A runtime engine 114 may use the block-based sparse matrix information for reorganizing the activation matrix to match the ordering of the reordered weight matrix. The runtime engine 114 may further launch the kernel for the matrix multiplication computation (e.g., the GEMM kernel) to the acceleration device 100.

In some embodiments, the driver 116 provides the block-based sparse matrix information to the acceleration device 100 to perform computations based on the matrix. The driver may also load the results of the computations and provide the results to the requesting application 108.

In some embodiments, the acceleration device 100 includes one or more processing elements (PEs) 118, a memory 120, an activation order metadata register 122, and a block sparse matrix metadata register 124. In some embodiments, the processing elements 118 and the memory 120 may integrated onto a single chip to reduce data movement between the memory and the PEs and reduce energy consumption. In this regard, the acceleration device 100 may be implemented as an advanced high-bandwidth memory (HBM) device.

The memory 120 may be a 3-D stacked memory that includes two or more memory dies that may be vertically stacked on top of each other over a buffer die. The memory dies may be implemented as DRAMs. However, the present disclosure is not limited thereto, and the memory dies may be implemented as any suitable memory that may be implemented in a 3D-stacked structure.

The PE 118 may be configured to perform computations or operations in response to the launching the matrix multiplication computation kernel by the host 102. In this regard, the PE 118 may include a processing circuit such as, for example, a tensor engine, for performing the matrix multiplication computations.

In some embodiments, the activation order metadata and the sparse matrix metadata provided to the acceleration device 100 during the kernel launching stage are respectively stored in the activation order metadata register 122 and the block sparse matrix metadata register 124. The PE 118 may load a non-zero valued submatrix of the weight matrix from the memory 120 based on identification of the location of the submatrix from the sparse matrix metadata. The PE 118 may further load from the memory 120 a corresponding portion or submatrix of the activation matrix based on the activation order provided by the activation order metadata. The PE 118 (e.g., the tensor engine) may perform a matrix multiplication (e.g., dot product calculations) based on the loaded submatrices of the weight and activation matrices. In some embodiments, the matrix multiplication that is performed by the PE 118 is a column-wise block matrix multiplication that retrieves the columns of the block-based sparse matrix to perform the matrix multiplications with the activation matrix. The results of the calculations may be written back to the memory 120 in the order of the original activation data based on the activation order metadata information.

In some embodiments, the matrix multiplications may be performed by two or more PEs 118 in a concurrent manner. For example, a first PE 118 may perform a first matrix multiplication based on a first column or first non-zero valued submatrix of the weight matrix, and a second PE may perform a second matrix multiplication based on a second column or a second non-zero-valued submatrix of the weight matrix (e.g., in a concurrent manner), to generate temporary results. The temporary results may be accumulated into a final output matrix and written into the memory 120. The final output matrix may be retrieved by the application 168 to generate a prediction or an inference for a layer of a machine learning model.

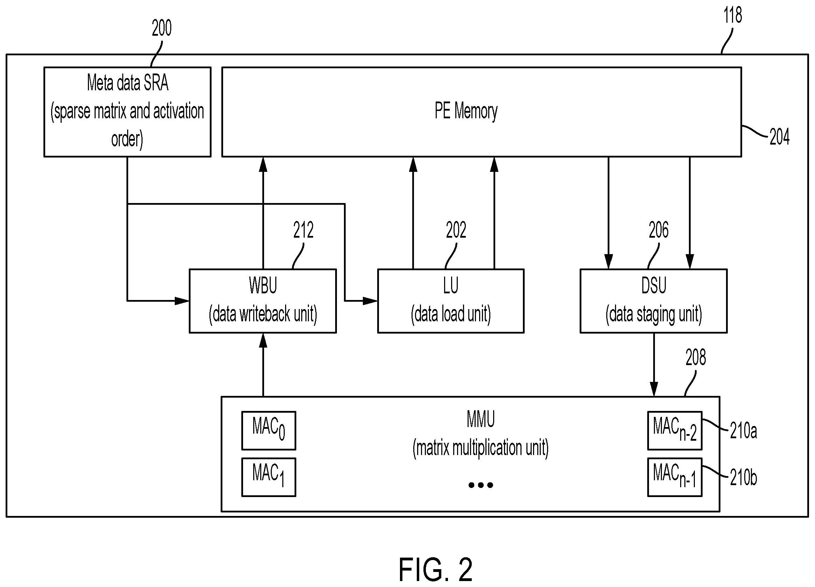

FIG. 2 depicts a block diagram of the processing element 118 of the acceleration device 100 according to one or more embodiments. The processing element 118 may load the activation order metadata and the block sparse matrix metadata into a metadata memory 200 to perform a matrix multiplication. The metadata memory 200 include, for example, a static random-access memory (SRAM). The metadata in the metadata memory 200 may identify the location of the non-zero valued submatrices of the of the block-based sparse matrix stored in the memory 120. In some embodiments, the metadata information is provided to a data load unit 202 that is configured to load the non-zero valued submatrices of the weight matrix and corresponding activation values of the activation matrix into an address of a PE memory (second memory) 204. In some embodiments, the PE memory 204 is implemented as a multi-bank SRAM. Different portions of the weight and/or activation matrices may be stored in different banks of the PE memory 204 for concurrent access and processing of the matrices.

A data staging unit 206 is configured to stage the data in the PE memory 204 by, for example, breaking down the submatrices into smaller blocks or tiles, to load the tiles into vector registers of a matrix multiplication unit (MMU) 208. The MMU 208 may be configured to perform multiplication and accumulation of the loaded tiles via one or more multiply and accumulate (MAC) units 210a, 210b to form a tile of an output matrix. An element-by-element dot matrix multiplication may be performed based on the elements in the loaded tiles.

A data writeback unit 212 may send the matrix computation results to the PE memory 204. The matrix computation results may be stored in a final output matrix according to the order of the original matrix as provided by the activation order metadata.

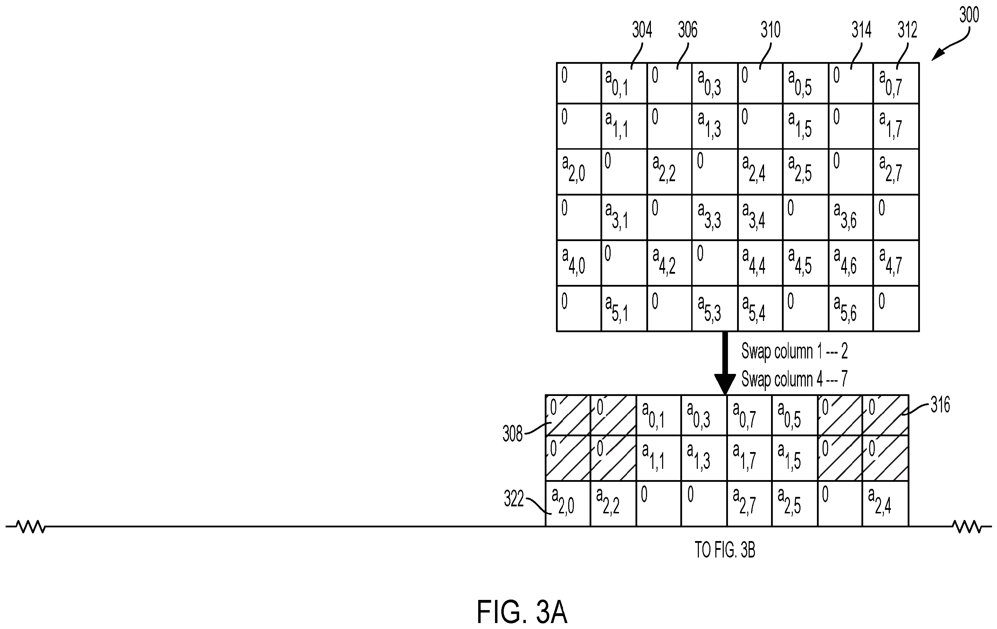

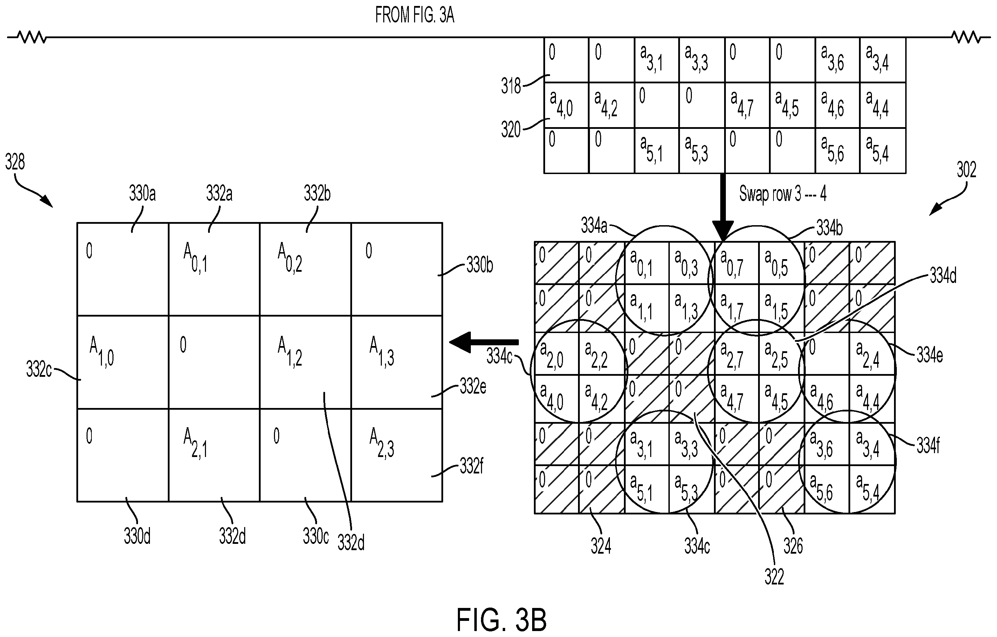

FIGS. 3A-3B depict conceptual layout diagrams of an original matrix 300 that undergoes a shuffling process via the sparse matrix library 110 to generate a reordered matrix 302 according to one or more embodiments. In the example of FIGS. 3A-3B, column index one 304 and column index two 306 are swapped for allowing the zero-valued elements of column index two to be adjacent to the zero-valued elements in column index zero 308. A first grouping of zero-valued elements 308 may be generated based on the zero-valued elements.

In a similar manner, column index four 310 and column index seven 312 are swapped for allowing the zero-valued elements of column index four to be adjacent to the zero-valued elements of column index six 314. A second grouping 316 of zero-valued elements may be generated based on the zero-valued elements.

In addition, in the example of FIGS. 3A-3B, row index three 318 and row index four 320 are swapped to further aggregate and isolate additional zero-valued elements and form further groupings of zero-valued elements 322, 324, and 326.

A block-based sparse matrix 328 is generated based on the groupings of the reordered matrix 302. The sparse matrix 328 may contain zero-valued submatrices 330a-330d corresponding to the zero-valued groupings 308, 316, 322, 324, and 326. The sparse matrix 328 may also contain dense (non-zero valued) submatrices 332a-332f that correspond to the non-zero valued groupings 334a-334f. In some cases, a dense submatrix is not devoid of zero-valued elements. In the example of FIGS. 3A-3B, submatrix 332e contains a zero-valued element as depicted in the corresponding grouping 334e. In some embodiments, matrix multiplication calculations are performed based on the dense submatrices 332a-332f. In some embodiments, no matrix multiplication calculations are performed based on the zero-valued submatrices, helping reduce energy consumption and use of compute resources. Memory bandwidth usage may also be reduced as the non-zero valued submatrices need not be loaded from the memory 120 during the matrix multiplication computations.

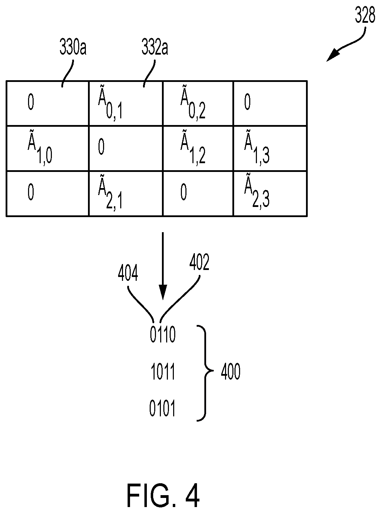

FIG. 4 depicts a conceptual layout diagram of sparse matrix metadata 400 for the example sparse matrix 328 of FIGS. 3A-3B. The sparse matrix metadata 400 is stored as a bit-mask matrix that has the same dimensions as the sparse matrix 328. The bit-mask matrix may store a value of "1" in a position 402 corresponding to a non-zero valued submatrix (e.g., submatrix 332a), and a value of "0" in a position 404 corresponding to a zero-valued matrix submatrix (e.g., submatrix 330a). The use of the bit-mask to identify the locations of the non-zero valued (as well as zero-valued) submatrices may reduce control circuit to identify the matrices for which computations needs to be performed, and may further allow the metadata to be stored in a storage efficient manner. The use of the bit-mask may further allow the PE to be used for both sparse matrix computations as well as dense matrix computations without extra control circuits. For example, for dense matrix computations, the bit-mask may store a value of 1 for all blocks of the matrix.

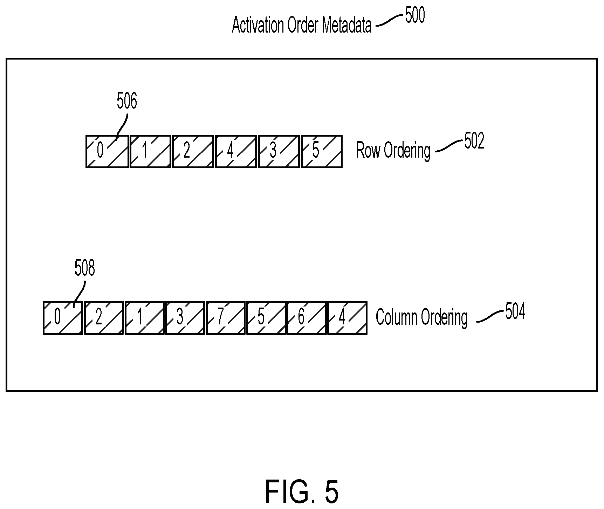

FIG. 5 depicts a conceptual layout diagram of an activation order metadata 500 for the reordered columns and rows of the original matrix 300 in the example of FIGS. 3A-3B. In some embodiments, the activation order metadata 500 includes a mapping of column/row indices of the original matrix 300 to column/row indices of the reordered matrix 302. For example, the activation order metadata 500 includes the original position indices of the original matrix 300 listed in an order that reflects a change of position of an element of the original matrix from a first position to a second position.

In some embodiments, the activation order metadata 500 includes a row ordering metadata 502 and a column ordering metadata 504. In some embodiments, the row ordering metadata includes the row indices 506 of the original matrix 300 in a new row order as depicted in the reordered matrix 302. In the example of FIGS. 3A-3B, the shuffling algorithm swaps row index 3 of the original matrix 300 with row index 4. Thus, the row ordering metadata 502 lists row indices 3 and 4 in the swapped order.

In some embodiments, the column ordering metadata 504 includes the column indices of the original matrix 300 in a new column order as depicted in the reordered matrix 302. In the example of FIGS. 3A-3B, the shuffling algorithm swaps column index 1 of the original matrix 300 with column index 2. Thus, the column ordering metadata 504 lists column indices 1 and 2 in a swapped order. In addition, in the example of FIGS. 3A-3B, the shuffling algorithm swaps column index 4 of the original matrix 300 with column index 7. Thus, the column ordering metadata 504 lists column indices 4 and 7 in a swapped order.

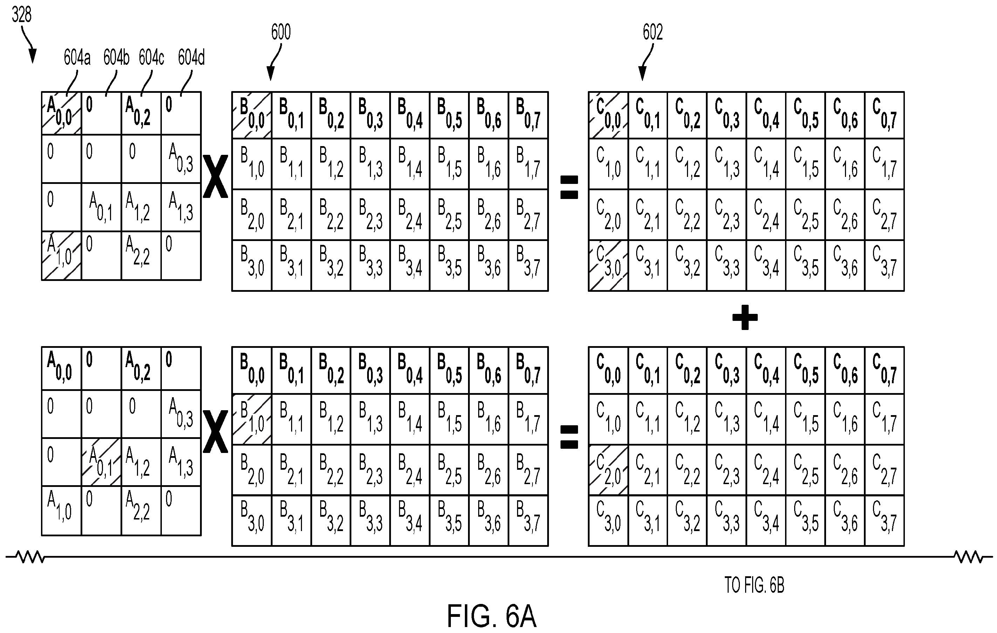

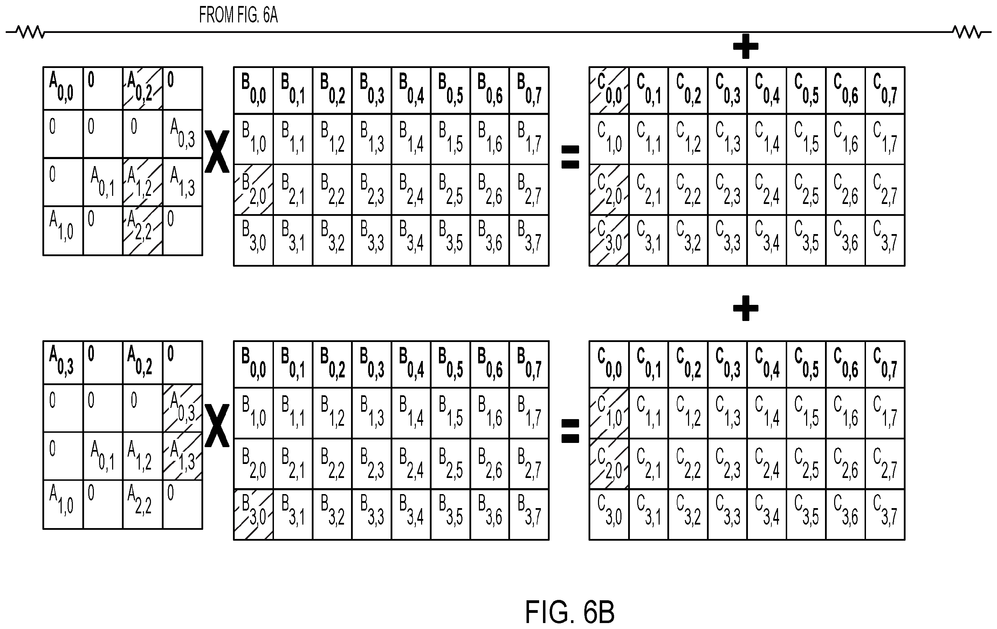

In some embodiments, the block-based sparse matrix multiplication computation is performed via a column-wise multiplicity method that helps achieve load balance and improves data reuse. FIGS. 6A-6B depict an example column-wise multiplication of the block-based sparse matrix 328 of FIGS. 3A-3B, with a second (e.g., activation) matrix 600, to generate a result matrix 602. By using the column-wise multiplicity method, the submatrices of the columns 604a-604d (collectively referenced as 604) of the block-based sparse matrix 328 are retrieved for performing the matrix multiplications (e.g., concurrently) based on each of the retrieved columns. The retrieved non-zero (dense) submatrices may be reused for the matrix multiplication computations without having to reload the submatrices. In addition, load balancing may be achieved as the data that is loaded for the second matrix 600 is uniform each time the data is read.

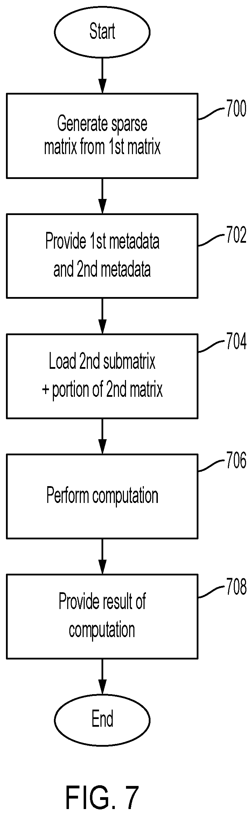

FIG. 7 depicts a flow diagram of a process for performing a matrix computation for a machine-learning operation according to one or more embodiments. The process starts, and in act 700, the sparse matrix library 110 of the host 102 generates a sparse matrix (e.g., a block-based sparse matrix) from a first matrix (e.g., a weight matrix). The generating of the sparse matrix may be done offline via heuristics or a shuffling algorithm that changes a first-zero valued element of the first matrix from a first position (e.g., column or row) to a second position (e.g., column or row). The sparse matrix may include a first submatrix with zero-valued elements and a second submatrix with non-zero valued elements. The first and second submatrices may have a preset size.

In act 702, the sparse matrix library 110 generates a first metadata and a second metadata, and provides the first and second metadata to the acceleration device 100 via the driver 116. The first metadata may be a sparse matrix metadata and may include a bit-mask storing a first value (e.g., value "0") for a location of the first submatrix and a second value (e.g., value "1") for the location of the second submatrix.

The second metadata may be an activation order metadata that includes an order for a second matrix (e.g., activation matrix). In this regard, the second metadata may provide a mapping of the indices of the first matrix to the indices of the reordered matrix. In some embodiments, the second metadata includes position (e.g., column or row) indices of the first matrix reflecting a change of position of the first zero-valued element from the first position to the second position. The sparse matrix metadata may be stored in the block sparse matrix metadata register 124 of the acceleration device 100. The activation order metadata may be stored in the activation order metadata register 122 of the acceleration device 100. The metadata may be retrieved by the PE 118 for performing a matrix multiplication computation.

In act 704, based on launching of the matrix multiplication kernel by the host 102, the PE 118 loads from the memory 120 onto the PE memory 204, the second submatrix and a portion of the second matrix. Identification of the second submatrix and may be based on the sparse matrix metadata that identifies the location of the second submatrix, and the identification of the portion of the second matrix may be based on the activation order metadata that identifies a mapping of the first matrix to the reordered matrix.

In act 706 the PE 118 performs a computation based on the second submatrix and the portion of the second matrix. The computation may include, for example a column-wise matrix multiplication of the second submatrix and the portion of the second matrix.

In act 708, the computation results may be provided to the host 102. In some embodiments, the computation results are provided to an application 108 for making an inference or prediction for a layer of a machine learning network. The inference or prediction may be by an Al application in which speed and latency may be a particularly important performance metric.

As a person of skill in the art should recognize, the block-based sparse matrix computations performed according to embodiments of the present disclosure consume less power, use less memory bandwidth, and perform less compute operations (making the matrix calculations faster), than dense matrix computations of some aspects. For example, in performing a dense matrix multiplication, each of the row vectors and each of the column vectors are retrieved from memory to calculate dot products of the row and column vectors in a parallelized manner. Retrieving the vectors from memory and performing the matrix multiplications consume power, create bottlenecks in memory bandwidth, and consume computing resources for FLOPs.

Block-based sparse matrix multiplication according to embodiments of the present disclosure may reduce memory capacity requirement, bandwidth, power consumption, and processing cycles, by isolating or aggregating the zero-valued elements of a matrix that may appear in irregular positions, into blocks or submatrices of a reordered matrix, and by-passing retrieval and dot product computations of the zero valued submatrices.

The metadata structures according to the embodiments of the present disclosure may also be simplified and stored with less storage requirements than sparse matrix multiplication systems of some aspects. For example, sparse matrix multiplication systems of some aspects may require multiple (e.g., three) one-dimensional arrays for identifying value, column index, and row index of the zero-valued elements of a matrix. In contrast, the sparse matrix metadata according to embodiments of the present disclosure may be implemented as a bit-mask for simplified control and reduced storage requirements.

Embodiments of the present disclosure further provide the benefit of using the same tensor engine for dense matrix multiplications as well as sparse matrix multiplications without extra control circuits. For example, a dense matrix multiplication may be performed for all blocks of the matrix by setting all the values of the bit-mask to "1." In some embodiments, the column-wise multiplicity method used for the block-based sparse matrix multiplication may help achieve load balance and allow for data reuse.

The block-based sparse matrix computation according to embodiments of the present disclosure may enhance performance and responsiveness across a wide range of Al applications, such as, for example, Al application which speed and latency may be a particularly important performance metric. For example, in autonomous vehicle systems, Al tasks such as image classification and object detection may be carried out using deep convolutional neural networks (CNNs) and the like, which perform numerous matrix multiplications across multiple layers to extract and classify features from input images. The block-based sparse matrix computations of the various embodiments may reduce the latency associated with such matrix operations, thus reducing the time it takes to analyze high-resolution visual data and output inferences or predictions related to detected images or objects. This improvement in processing speed may support faster detection of traffic signs, pedestrians, other vehicles, and road features, thereby contributing to improved responsiveness and safety in real-time driving scenarios. For example, the speed in which the matrix multiplications are performed may control the speed in which an autonomous vehicle system is controlled to move to avoid collision or other hazardous situations.

In natural language processing (NLP) applications, such as speech-to-text conversion or real-time translation, transformer-based models may perform a large number of matrix multiplications as part of their attention mechanisms and feedforward layers. The block-based sparse matrix computations of the various embodiments may help accelerate these matrix multiplications, reducing the latency of token prediction and contextual encoding steps. As a result, translation systems may respond more promptly to incoming speech or text, and thus perform more seamlessly to meet the speed of natural conversation.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hardwired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for performing machine learning operations have been specifically described and illustrated herein, many modifications and variations will be apparent to those skilled in the art. Accordingly, it is to be understood that systems and methods for machine learning operations constructed according to principles of this disclosure may be embodied other than as specifically described herein. The disclosure is also defined in the following claims, and equivalents thereof.

The systems and methods for processing storage transactions may contain one or more combination of features set forth in the below statements.

Statement 1: A method comprising: generating, by a computing device, a sparse matrix from a first matrix, the sparse matrix having a first submatrix with zero-valued elements and a second submatrix with non-zero valued elements; providing, by the computing device to a processing element, first metadata and second metadata, the first metadata including a location of the second submatrix, and the second metadata including an order for a second matrix; loading onto memory, by the processing element, the second submatrix based on the first metadata; loading onto the memory, by the processing element, a portion of the second matrix based on the second metadata; based on loading the second submatrix and the portion of the second matrix onto the memory, performing a computation based on the second submatrix and the portion of the second matrix; and providing a result of the computation to the computing device.

Statement 2. The method of Statement 1, wherein the sparse matrix includes weights of a layer of a machine learning model, and the second matrix includes activation values.

Statement 3. The method of Statement 1, wherein the first metadata includes a bit-mask storing a first value for a location of the first submatrix and a second value for the location of the second submatrix.

Statement 4. The method of Statement 1, wherein the generating of the sparse matrix includes: changing a first zero-valued element of the first matrix from a first position to a second position; grouping into the first submatrix, the first zero-valued element in the second position and a second zero-valued element in a third position adjacent to the second position.

Statement 5. The method of Statement 4, wherein the second metadata includes position indices of the first matrix reflecting a change of position of the first zero-valued element from the first position to the second position.

Statement 6. The method of Statement 4, wherein the first position is a first row of the first matrix and the second position is a second row of the first matrix.

Statement 7. The method of Statement 4, wherein the first position is a first column of the first matrix and the second position is a second column of the first matrix.

Statement 8. The method of Statement 1, wherein the generating of the sparse matrix includes: identifying one or more non-zero valued elements in the first matrix; and grouping into the second submatrix the one or more non-zero valued elements.

Statement 9. The method of Statement 1, wherein the first submatrix and the second submatrix have a preset size.

Statement 10. The method of Statement 1, wherein the computation is a column-wise matrix multiplication of the second submatrix and the portion of the second matrix.

Statement 11. A computing device coupled to a processing element, the computing device comprising: a processor; and a first memory, wherein the first memory stores instructions that, when executed by the processor, cause the processor to: generate a sparse matrix from a first matrix, the sparse matrix having a first submatrix with zero-valued elements and a second submatrix with non-zero valued elements; provide to the processing element a first metadata and second metadata, the first metadata including a location of the second submatrix, and the second metadata including an order for a second matrix; and receive from the processing element a result of a computation based on the sparse matrix, wherein, the processing element is designed to: load onto a second memory the second submatrix based on the first metadata; load onto the second memory a portion of the second matrix based on the second metadata; and based on loading the second submatrix and the portion of the second matrix onto the second memory, perform the computation based on the second submatrix and the portion of the second matrix.

Statement 12. The computing device of Statement 11, wherein the sparse matrix includes weights of a layer of a machine learning model, and the second matrix includes activation values.

Statement 13. The computing device of Statement 11, wherein the first metadata includes a bit-mask storing a first value for a location of the first submatrix and a second value for the location of the second submatrix.

Statement 14. The computing device of Statement 11, wherein the instructions that cause the processor to generate the sparse matrix include instructions that cause the processor to: change a first zero-valued element of the first matrix from a first position to a second position; group into the first submatrix, the first zero-valued element in the second position and a second zero-valued element in a third position adjacent to the second position.

Statement 15. The computing device of Statement 14, wherein the second metadata includes position indices of the first matrix reflecting a change of position of the first zero-valued element from the first position to the second position.

Statement 16. The computing device of Statement 14, wherein the first position is a first row of the first matrix and the second position is a second row of the first matrix.

Statement 17. The computing device of Statement 14, wherein the first position is a first column of the first matrix and the second position is a second column of the first matrix.

Statement 18. The computing device of Statement 11, wherein the instructions that cause the processor to generate the sparse matrix include instructions that cause the processor to: identify one or more non-zero valued elements in the first matrix; and group into the second submatrix the one or more non-zero valued elements.

Statement 19. The computing device of Statement 11, wherein the first submatrix and the second submatrix have a preset size.

Statement 20. The computing device of Statement 11, wherein the computation is a column-wise matrix multiplication of the second submatrix and the portion of the second matrix.

## Claims

1. A method comprising:
generating, by a computing device, a sparse matrix from a first matrix, the sparse matrix having a first submatrix with zero-valued elements and a second submatrix with non-zero valued elements;
providing, by the computing device to a processing element, first metadata and second metadata, the first metadata including a location of the second submatrix, and the second metadata including an order for a second matrix;
loading onto memory, by the processing element, the second submatrix based on the first metadata;
loading onto the memory, by the processing element, a portion of the second matrix based on the second metadata;
based on loading the second submatrix and the portion of the second matrix onto the memory, performing a computation based on the second submatrix and the portion of the second matrix; and
providing a result of the computation to the computing device.

2. The method of claim 1, wherein the sparse matrix includes weights of a layer of a machine learning model, and the second matrix includes activation values.

3. The method of claim 1 or 2, wherein the first metadata includes a bit-mask storing a first value for a location of the first submatrix and a second value for the location of the second submatrix.

4. The method of any one of claims 1 to 3, wherein the generating of the sparse matrix includes:
changing a first zero-valued element of the first matrix from a first position to a second position;
grouping into the first submatrix, the first zero-valued element in the second position and a second zero-valued element in a third position adjacent to the second position.

5. The method of claim 4, wherein the second metadata includes position indices of the first matrix reflecting a change of position of the first zero-valued element from the first position to the second position.

6. The method of claim 4 or 5, wherein the first position is a first row of the first matrix and the second position is a second row of the first matrix.

7. The method of claim 4 or 5, wherein the first position is a first column of the first matrix and the second position is a second column of the first matrix.

8. The method of any one of claims 1 to 7, wherein the generating of the sparse matrix includes:
identifying one or more non-zero valued elements in the first matrix; and
grouping into the second submatrix the one or more non-zero valued elements.

9. The method of any one of claims 1 to 8, wherein the first submatrix and the second submatrix have a preset size.

10. The method of any one of claims 1 to 9, wherein the computation is a column-wise matrix multiplication of the second submatrix and the portion of the second matrix.

11. A computing device coupled to a processing element, the computing device comprising:
a processor; and
a first memory, wherein the first memory stores instructions that, when executed by the processor, cause the processor to:
generate a sparse matrix from a first matrix, the sparse matrix having a first submatrix with zero-valued elements and a second submatrix with non-zero valued elements;
provide to the processing element a first metadata and second metadata, the first metadata including a location of the second submatrix, and the second metadata including an order for a second matrix; and
receive from the processing element a result of a computation based on the sparse matrix,
wherein, the processing element is designed to:
load onto a second memory the second submatrix based on the first metadata;
load onto the second memory a portion of the second matrix based on the second metadata; and
based on loading the second submatrix and the portion of the second matrix onto the second memory, perform the computation based on the second submatrix and the portion of the second matrix.

12. The computing device of claim 11, wherein the sparse matrix includes weights of a layer of a machine learning model, and the second matrix includes activation values.

13. The computing device of claim 11 or 12, wherein the first metadata includes a bit-mask storing a first value for a location of the first submatrix and a second value for the location of the second submatrix.

14. The computing device of any one of claims 11 to 13, wherein the instructions that cause the processor to generate the sparse matrix include instructions that cause the processor to:
change a first zero-valued element of the first matrix from a first position to a second position;
group into the first submatrix, the first zero-valued element in the second position and a second zero-valued element in a third position adjacent to the second position.

15. The computing device of claim 14, wherein the second metadata includes position indices of the first matrix reflecting a change of position of the first zero-valued element from the first position to the second position.
